Europäisches Patentamt

(19) European Patent Office

Office européen des brevets

(11) EP 0 702 305 A1

(12) **EUROPEAN PATENT APPLICATION**

(43) Date of publication:
20.03.1996 Bulletin 1996/12

(51) Int. Cl.⁶: **G06F 12/08**, G11B 20/10, G11B 19/00, G11B 19/02

(21) Application number: 95114329.6

(22) Date of filing: 12.09.1995

(84) Designated Contracting States:
**DE FR GB**

(30) Priority: **13.09.1994 JP 219170/94**

(71) Applicant: **NEC CORPORATION**
**Tokyo (JP)**

(72) Inventor: **Kitagawa, Masayuki,**
**c/o NEC Corporation**
**Minato-ku, Tokyo (JP)**

(74) Representative: **VOSSIUS & PARTNER**
**Siebertstrasse 4**
**D-81675 München (DE)**

(54) **Disk memory apparatus**

(57)     A disk memory apparatus includes a disk memory drive, a non-volatile memory and a controller. The non-volatile memory stores a portion of data contained in the disk memory drive and maintains contents thereof when the apparatus is turned off. Instead of the data in the disk memory drive, the controller transfers data in the nonvolatile memory to a host computer when the disk memory drive is not ready for data reproduction soon after the apparatus is turned on. The controller selects data frequently accessed soon after the apparatus is turned on and stores the data in the nonvolatile memory. This selection is performed according to statistics on data accessed by the computer.

**Description**

The present invention relates to a disk memory apparatus, and more particularly to a disk memory apparatus having a memory to store a portion of data in a disk memory thereof.

A conventional disk memory apparatus (e.g., a hard disk apparatus, an optical disk memory apparatus and a flexible memory apparatus) includes a disk memory drive to rotate a disk memory. When the power of the disk memory apparatus is turned on, the disk memory drive begins to rotate the disk memory. The rotational speed of the disk memory increases to reach a predetermined rotational speed (e.g., 1,200 to 3,600 rpm in the case of certain Flexible Disk Drive or other operational speeds in the case of other drive devices). Thereafter, the disk memory apparatus sends to an information processing device (e.g., a host computer) a ready signal indicating that the disk memory apparatus is ready to be accessed. Upon receiving the ready signal, the information processing device begins to access the disk memory apparatus. Thus, in the conventional disk memory apparatus, the information processing device cannot access the disk memory apparatus until the rotational speed of the disk memory reaches the predetermined speed (e.g., an operational speed).

Another conventional disk memory apparatus has a disk cache to reduce access time. The disk cache stores a portion of data in the disk memory. When the information processing device requires data stored in the disk cache as well as in the disk memory, the disk memory apparatus reads the data out of the disk cache in lieu of the disk memory. This reduces the access time of the data because the access time of the disk cache is by far shorter than that of the disk memory.

The contents of the disk cache is updated according to a replacement policy such as least recently used (LRU) so as to increase the hit ratio of the disk cache.

However, in the conventional disk memory apparatus, a volatile memory is used as the disk cache and the disk cache loses the contents therein when the power of the disk memory apparatus is turned off. Previously, it was regarded as almost meaningless to use a nonvolatile memory as the disk cache because the data stored before the power is turned off is seldom accessed after the power is turned on again. The reason for this consideration is that the information processing device executes different programs before and after the power-off and different programs tend to access different portions of the disk memory.

Thus, even if the disk memory apparatus has the disk cache, the information processing device has to wait for accessing data until the rotational speed of the disk memory reaches the predetermined value.

One object of the present invention is to allow a disk memory apparatus to send data before the disk memory becomes ready to be accessed. Specifically, the disk memory apparatus sends the data before the rotational speed of the disk memory reaches a predetermined speed (e.g., an operational speed).

Another object of the present invention is to allow a disk memory apparatus to send data soon after the power is turned on.

Another object of the present invention is to allow a disk memory apparatus to send data soon after the disk memory drive is restarted.

Another object of the present invention is to select data frequently accessed soon after the power is turned on.

Another object of the present invention is to select data frequently accessed after the disk memory apparatus is idle for a predetermined period of time.

Another object of the present invention is to enhance the lifetime of the disk memory apparatus.

Another object of the present invention is to save electrical power supplied to the disk memory apparatus.

According to the present invention, a disk memory apparatus is coupled with an information processing device and supplied with electrical power. The disk memory apparatus includes a disk memory drive, a non-volatile memory and a controller. The disk memory drive stores data therein. The non-volatile memory stores a portion of data contained in the disk memory drive and maintains contents thereof when the electrical power is removed. The controller transfers data in the nonvolatile memory to the information processing device when the disk memory drive is not ready for data reproduction.

The controller may transfer the data when the disk memory device is not ready for data reproduction after turning on of the electrical power. In this case, the non-volatile memory may store data requested by the information processing device when the electrical power is turned on.

The disk memory apparatus may include shutdown means for stopping the disk memory drive after the disk memory apparatus is idle for a predetermined period of time. In this case, the controller may transfer the data when the disk memory drive is not ready due to stoppage thereof by the shutdown means.

The controller may select data to be stored in the nonvolatile memory according to statistics on data accessed by the information processing device. More specifically, the controller may store in the nonvolatile memory history information indicating a history of data accessed by the information processing device, and the controller may select data to be stored in the nonvolatile memory according to the history information. The controller may select data to be stored in the nonvolatile memory according to a frequency of access to the data.

The nonvolatile memory may include a flash memory.

BRIEF DESCRIPTION OF THE DRAWINGS

Other objects, features and advantages of the present invention will become more apparent when the following description is read in conjunction with the accompanying drawings, wherein:

Fig. 1 is a block diagram of a disk memory apparatus according to the present invention.
Fig. 2 shows areas 21-24 in a non-volatile memory 16.
Fig. 3 shows areas in index areas 31 to 35 of a data block table area 22.
Fig. 4 shows areas in entry areas 411 to 428 in respective area 41 for "turning on" and area 42 for shutdown.
Fig. 5 shows areas in ranking areas 51 to 53 in a weight table area 5.
Figs. 6-12 are flowcharts illustrating the operation of a main processor 15 after the power of the disk memory apparatus is turned on.

In these drawings, the same reference numerals depict the same parts, respectively.

## DETAILED DESCRIPTION OF THE PREFERRED EMBODIMENTS

Next is described a preferred embodiment of the present invention.

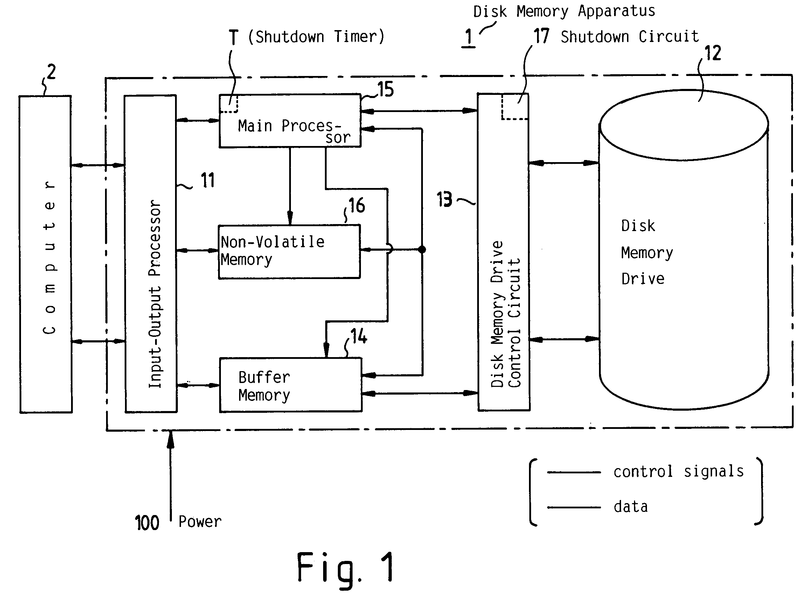

Referring to Fig. 1, a disk memory apparatus 1 according to the embodiment is coupled to an information processing device (e.g., a computer) 2. The disk memory apparatus 1 sends to the computer 2 a ready signal indicating that the disk memory apparatus is ready to handle requests from the computer 2. After receiving the ready signal, the computer 2 requests data reproduction and data recording to the disk memory apparatus 1 by sending commands to the disk memory apparatus 1.

The data is recorded and reproduced in blocks each including 512 bytes. Each block is assigned a block address. The computer 2 sends the block address along with the commands to identify the data block to be accessed.

The disk memory apparatus 1 is supplied with electrical power 100. The electrical power is turned on and turned off by the computer 2 or the operator.

The disk memory apparatus 1 includes an input-output processor 11, a main processor 15, a non-volatile memory 16, a buffer memory 14, a disk memory drive 12 and a disk memory drive control circuit 17. The electrical power 100 is supplied to those elements in the disk memory apparatus 1.

The input-output processor 11 receives the commands from the computer 2. The input-output processor 11 controls the data transfer between the computer 2 and the non-volatile memory 16 and between the computer 2 and the buffer memory 14. The input-output processor 11 sends the ready signal to the computer 2. The operation of the input-output processor 11 is controlled by the main processor 15.

The disk memory drive 12 (e.g., a hard disk drive, an optical disk drive or a flexible disk drive) includes a disk memory (e.g., a hard disk, an optical disk or a flexible disk) rotated by a spindle motor. The disk memory drive includes a head for reproducing data from and/or recording data in the disk memory.

The disk memory drive control circuit 13 controls the operation of the disk memory drive 12. The disk memory drive control circuit 13 reads data out of the disk memory drive 12 and stores the data into the buffer memory 14. The disk memory drive control circuit 13 reads data out of the buffer memory 14 and writes the data in the disk memory drive 12.

The disk memory drive control circuit 13 sends a signal to the main processor when the disk memory drive becomes ready to perform data reproduction and/or data recording. More specifically, the disk memory drive control circuit 13 sends the signal when the rotational speed of the disk memory in the disk memory drive 12 reaches a predetermined value. The predetermined value may be set by the designer according to the designer's requirements.

The disk memory drive control circuit 13 includes a shutdown circuit 17. The shutdown circuit 17 suspends the rotation of the spindle motor in the disk memory drive 12 when receiving a shutdown signal from the main processor 15. In this exemplary embodiment, the shutdown circuit 17 turns off the power of the disk memory drive 12.

The non-volatile memory 16, which is a key feature of the present invention, stores data sent from the main processor 15. The non-volatile memory 16 retains the contents thereof even if the electrical power 100 is turned off. In this exemplary embodiment, the non-volatile memory 16 includes a flash memory. A random access memory having a back-up battery can also be used as the non-volatile memory 16. However, it should be understood that non-volatile memory does not include disk memories such as a magnetic disk memory and an optical disk memory.

In this exemplary embodiment, the non-volatile memory 16 has an error checking/correcting function using the cycle redundancy check (CRC) as an exemplary error detection algorithm.

The main processor 15 executes programs stored in a memory (not shown in the figure). By executing the programs, the main processor 15 controls the operation of the input-output processor 11 and the disk memory drive control circuit 13. The main processor 15 also accesses the non-volatile memory 16 and the buffer memory 14.

The main processor 15 includes a shutdown timer T. The contents of the shutdown timer T is reset to a predetermined value when the disk memory drive 12 is accessed. The contents of the shutdown timer T is decremented while the disk memory drive 12 is idle. The shutdown timer T generates a signal when a predetermined period of time has passed after the last resetting. Upon receiving this signal, the main processor 15 sends the shutdown signal to the shutdown circuit 17.

Moreover, the main processor has the functions disclosed below.

The main processor 15 stores information of a history of the data blocks accessed by the computer 2 in the non-volatile memory 16.

The main processor 15 selects part of the data in the disk memory to be stored in the non-volatile memory 16 according to the aforementioned information.

When the computer 2 requests data stored in the non-volatile memory 16, the main processor 15 transfers data in the non-volatile memory 16 to the computer 2 instead of the data in the disk memory of drive 12.

When the disk memory drive is idle for a predetermined period of time, the main processor 15 suspends the rotation of the spindle motor in the disk memory drive 12.

The details of the operation of the main processor 15 are described below.

Next is described the structure of the data stored in the non-volatile memory 16.

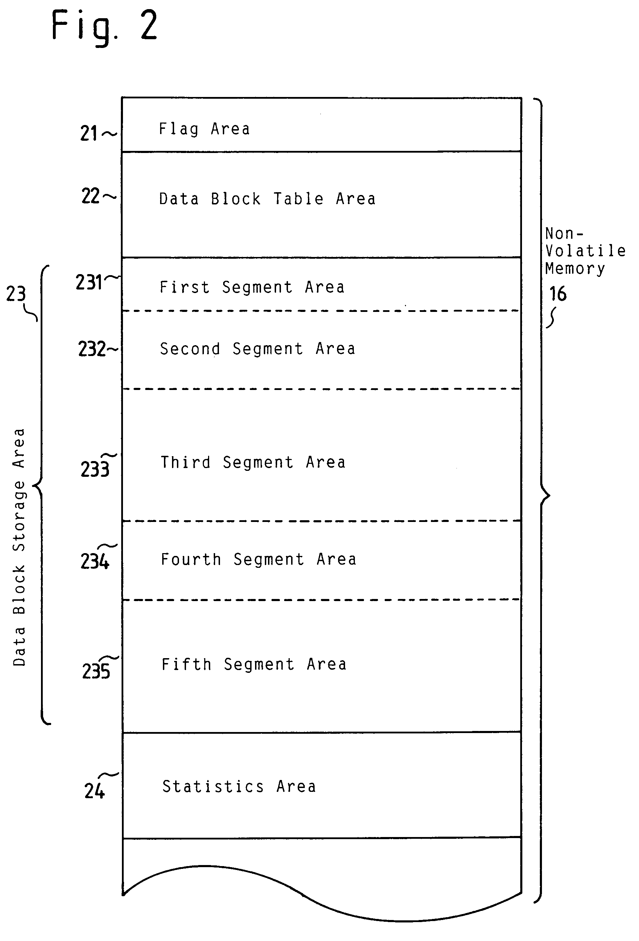

Referring to Fig. 2, the non-volatile memory 16 has a flag area 21, a data block table area 22, a data block storage area 23 and a statistics area 24. The data block storage area 23 includes first to fifth segment areas 231 to 235.

The flag area 21 stores a flag indicating whether effective data exists in the non-volatile memory 16 or not. In this exemplary embodiment, the flag includes 2 bytes. The flag indicates that effective data exists in the non-volatile memory 16 when the value of the flag is set to 5555h by hexadecimal.

The data block table area 22 stores information indicating a relationship between the data blocks in the data block storage area 23 and those in the disk memory.

The data block storage area 23 stores parts (i.e., copies) of data blocks in the disk memory. The data block storage area 23 is divided into first to fifth segment areas 231 to 235. The first and second segment areas 231 and 232 store data blocks frequently accessed by the computer 2 soon after the power 100 is turned on. The third to fifth segment areas 233 to 235 store data blocks frequently accessed by the computer 2 after the disk memory drive 12 is idle for the predetermined period of time. The method of selecting data blocks to be stored in the data block storage area 23 is described below.

The statistics area stores information of a history of data blocks accessed by the computer 2.

The contents of the aforementioned areas can be deleted independently.

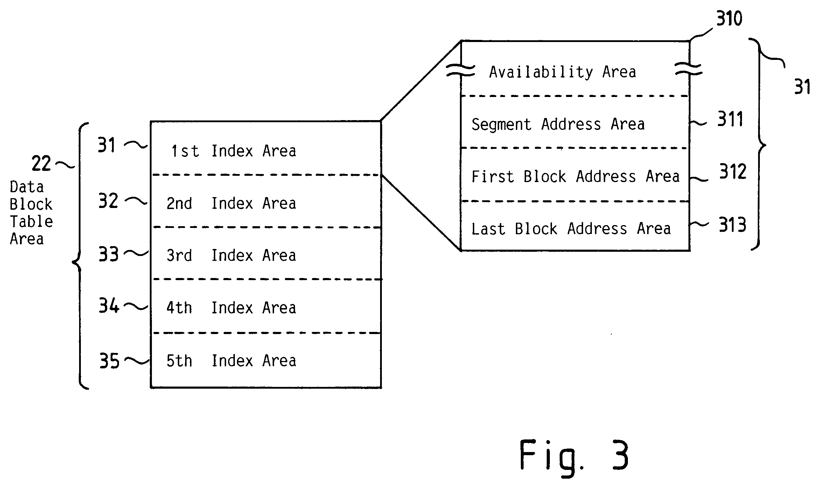

Referring to Fig. 3, the data block table area 22 includes first to fifth index areas 31 to 35 corresponding to the first to fifth segment areas 231 to 235, respectively. Each of the index areas 31 to 35 includes an availability area 310, a segment address area 311, a first block address area 312 and a last block address area 313. The availability area 310 stores information indicating whether the corresponding segment area stores data or not. The segment address area 311 stores the address of the corresponding segment area in the non-volatile memory 16. The first and last block address areas 312 and 313 store the block address of the data stored in the corresponding segment area. A plurality of data blocks may be stored in one segment area. In this case, the first and last block address areas 312 and 313 store the block addresses of the first and last data blocks, respectively.

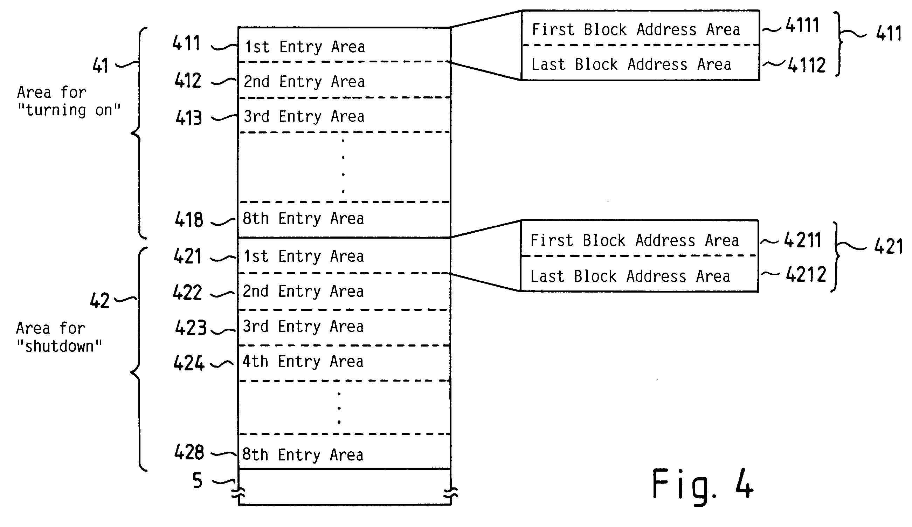

Referring to Fig. 4, the statistics area 24 includes an weight table area 5 and areas 41 and 42. The area 41 stores information about data accesses after the power 100 is turned on. The area 42 stores information about data accesses after the shutdown of the disk memory drive 12.

The area 41 includes first to eighth entry areas 411 to 418. Each of the entry areas 411 to 418 includes first and last block address areas 4111 and 4112. The entry areas 411 to 418 store first and last block addresses of the data recently accessed by the computer 2 after the power 100 is turned on.

The area 42 includes first to eighth entry areas 421 to 428. Each of the entry areas 421 to 428 includes first and last block address areas 4211 and 4212. The entry areas 421 to 428 store first and last block addresses of the data recently accessed by the computer 2 after the shutdown of the disk memory drive 12.

The method of updating the contents of the areas 41 and 42 is described below.

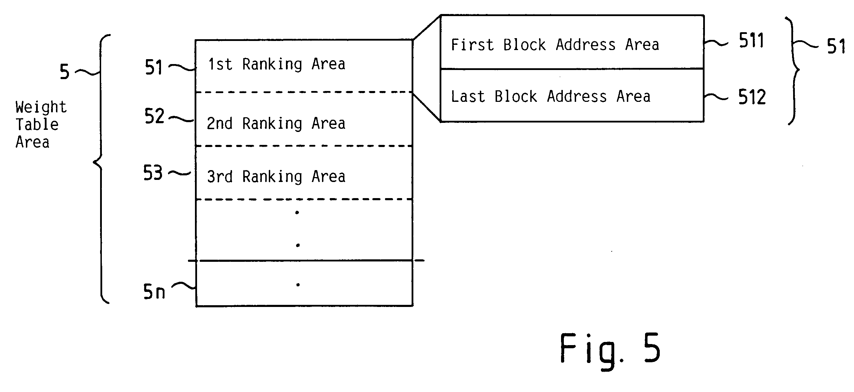

Referring to Fig. 5, the weight table area 5 includes a plurality of ranking areas 51 to 5n. Each of ranking areas 51 to 5n includes first and last block address areas 511 and 512. The ranking areas 51 to 5n store the first and last address of the data in the data block storage area 23 in descending order of the weight indicating access frequency.

Next will be described the operation of the main processor 15. The operation of the main processor 15 is implemented by a program stored in a memory (not shown in the figures).

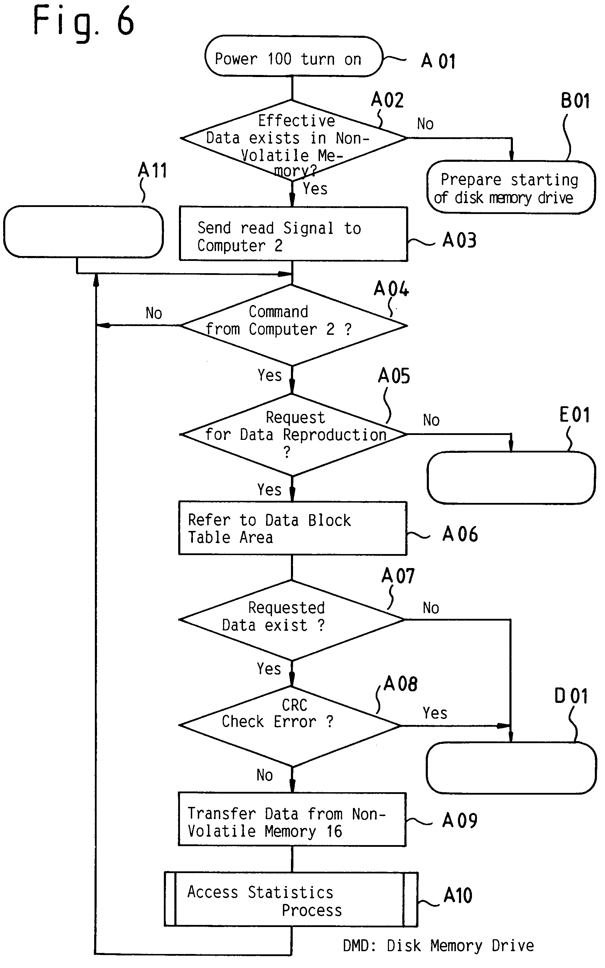

Referring to Fig. 6, when the power 100 is turned on, the main processor 15 and the other circuits are initialized (step A01). After the initialization, the main processor 100 sends the shutdown signal to the shutdown circuit 17.

When the initialization is completed, the main processor 15 determines whether or not effective data is stored in the data block storage area 23 by checking the contents of the flag area 21 (step A02).

When effective data is not stored, the program branches to step B01 to prepare starting of the disk memory drive 12. When effective data is stored, the input-output processor 11 sends to the computer 2 a ready signal indicating that the disk memory apparatus 1 is in an accessible state (step A03).

The main processor 15 waits for a command from the computer 2 (step A04). Upon receiving the command from the computer 2, it is determined whether or not the corresponding command is a request for reproducing (step A05). When the command is not a request for reproducing, the program branches to step E01.

When the command is a request for reproducing, the program determines whether or not the requested data blocks are stored in the non-volatile memory 16 by referring to the data block table area 22 (steps A06 and A07).

When the requested data blocks are not in the non-volatile memory 16, the program branches to step D01 to read the requested data blocks out of the disk memory drive 12.

When the requested data blocks are in the non-volatile memory 16, errors in the data blocks are checked by CRC (step A08). When an error is detected, the program stops to transfer the data blocks in the non-volatile memory 16 and branches to step D01 to read the data block out of the disk memory drive 12.

When an error is not detected, the main processor 15 transfers the corresponding data block to the computer 2 from the non-volatile memory 16 through the input-output processor 11 (step A09). This means that the requested data block can be transferred to the computer 2 even before the disk memory drive 12 is ready for data reproduction.

After transferring the data block, the program executes an access statistics process (step A10).

Next is described the process of the program on and after step B01.

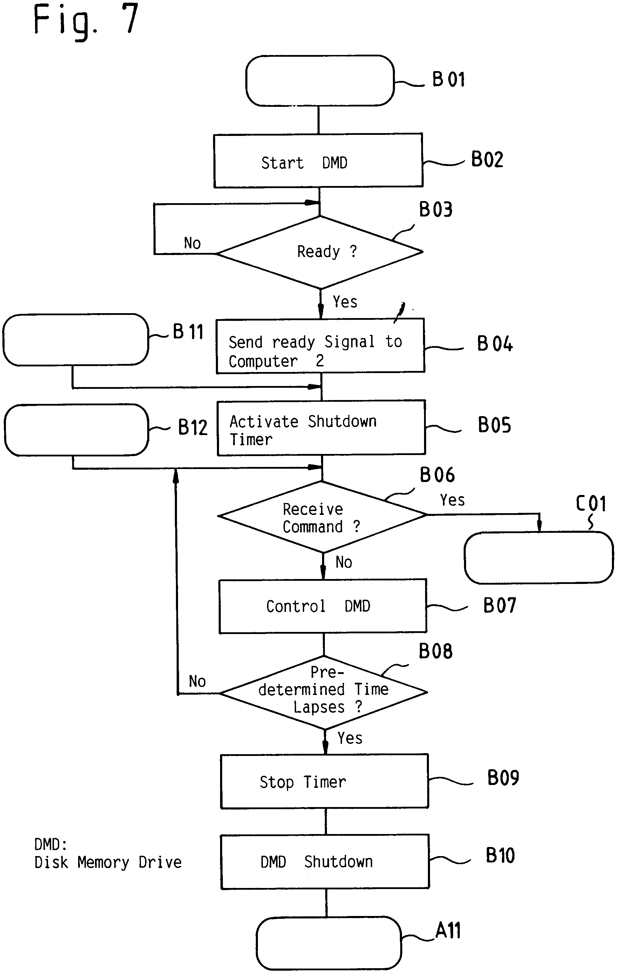

Referring to Fig. 7, the main processor 15 turns off the shutdown signal to start the disk memory drive 12 (step B02). Thereafter, the main processor 15 waits for a signal from the disk memory drive 12 indicating that the disk memory drive 12 is ready to reproduce data.

Upon receiving the signal through the disk memory drive control circuit 13, the program sends the ready signal to the computer 2 (step B04) to inform the computer 2 that the disk memory drive 12 is ready to reproduce data. Thereafter, the shutdown timer T is activated to start counting (step B06). When receiving a command from the computer 2 through the input-output processor 11, the program branches to step C01.

When no command is sent from the computer 2, the main processor 15 controls the operation of the disk memory drive 12 such as the rotation of the spindle motor and the position of the head (step B07).

When the shutdown timer T informs that the predetermined period of time has lapsed, the main processor 15 outputs the shutdown signal to the shutdown circuit 17. Upon receiving the shutdown signal, the shutdown circuit 17 turns off the power supplied to the disk memory drive 12. When the power is turned off, the disk memory drive' control circuit 13 performs preparatory operations such as the positioning of the head or the like (steps B08, B09 and B10). This condition of the disk memory apparatus 1 is hereinafter referred to as a "power saving state". When the disk memory apparatus 12 is brought into the power saving state, the program branches to step A04 in Fig. 6 (step A11).

As stated above, when disk memory drive 12 is not accessed for the predetermined time, the power supply of disk memory drive 12 is turned off to save power.

Next is described the process of the program on and after step C01.

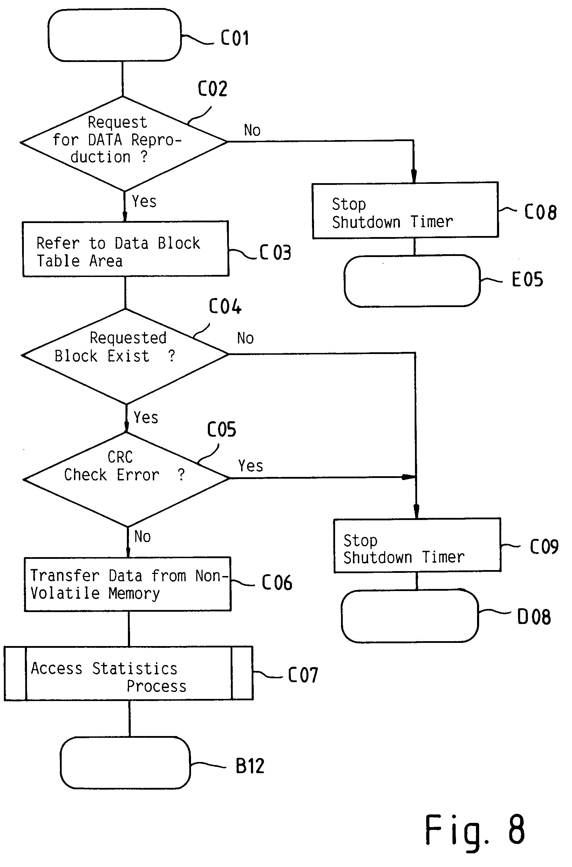

Referring to Fig. 8, the program determines whether or not the command sent from the computer 2 is a data reproduction request (step C02). When the command is not a data reproduction request, the program branches to step C08.

When the command is a data reproduction request, the program determines whether or not the data blocks requested by the computer 2 are stored in the non-volatile memory 16 by referring to the data block table area 22 (steps C03 and C04). When the requested data blocks are not in the non-volatile memory 16, the program branches to step C09. In step C09, the program suspends the counting of the shutdown timer T and branches to step D08.

When the requested data blocks are in the non-volatile memory 16, errors in the data blocks are checked by CRC (step C05). When an error is detected, the program branches to step C09 to read the data block out of the disk memory.

When an error is not detected, the program transfers the corresponding data block to the computer 2 from the non-volatile memory 16 through the input-output processor 11 (step C06).

After the data transfer in step C06, the program executes an access statistics process, which is described below (step C07). After the access statistics process, the program branches to step B12.

Next is described the operation of the program after step D01 shown in Fig. 6.

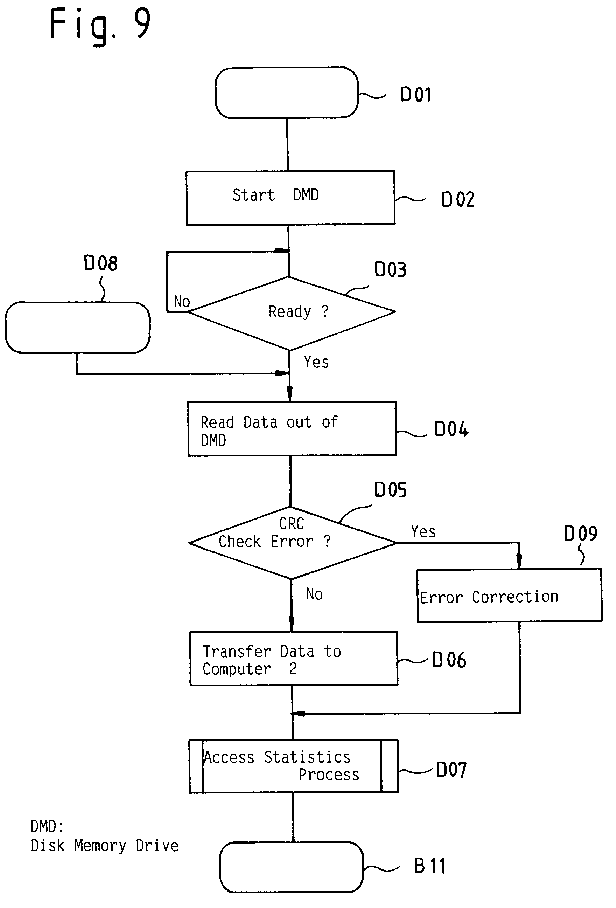

Referring to Fig. 9, the program turns off the shutdown signal to put the disk memory drive 12 in motion and waits until receiving a signal from the disk memory drive 12 indicating that it is ready for data reproduction (steps D02 and D03). Upon receiving this ready signal, the program transfers the requested data blocks in, disk memory drive 12 to the buffer memory 14 (step D04). If a data error is detected by an error inspection function of the buffer memory 14, a specified error process is executed and thereafter a process shown on and after step D07, as described below, is executed (steps D05 and D09).

When an error is not detected, then the data stored in the buffer memory 14 is transferred to the computer 2 through the input-output processor 11 (step D06). Thereafter, the program executes the access statistical process (step D07) and branches to step B11 to execute steps after step B04 in Fig. 7.

Next is described the operation of the program after step E01.

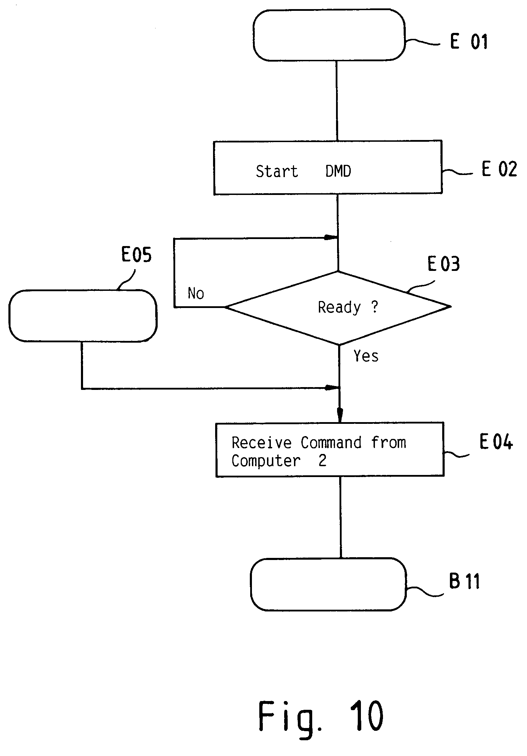

Referring to Fig. 10, the program terminates the shutdown signal to put the disk memory drive 12 in motion and waits until receiving a signal from the disk memory drive 12 indicating that it is ready for data reproduction (steps E02 and E03). Upon receiving this signal, the program executes the operation instructed by the command from the computer 2 (step E04). Thereafter, the program branches to step B11 in Fig. 7.

Next is described the details of the access statistics process of steps A10, C07 and D07.

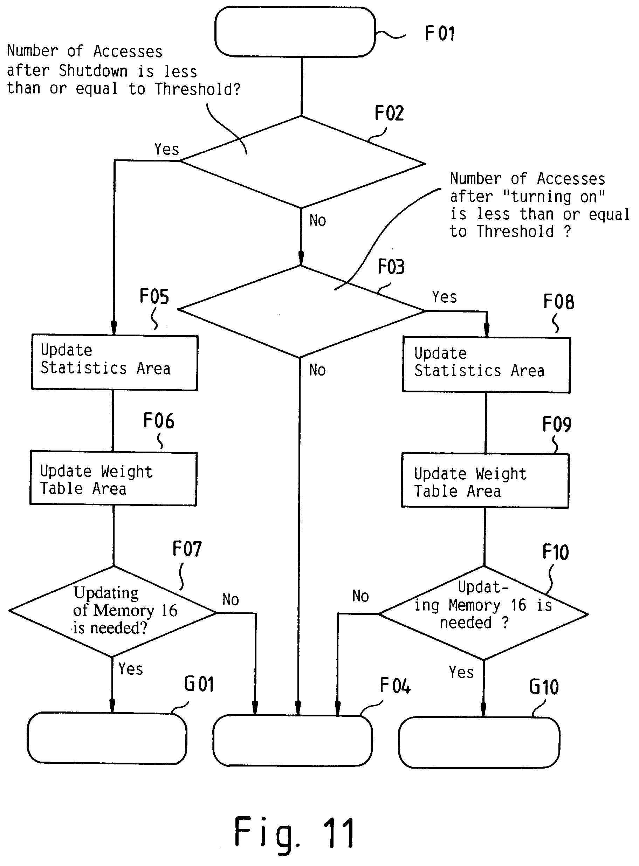

Referring to Fig. 11, in step F02, the program determines the number of accesses requested after the power is turned on. If the number is less than or equal to a predetermined threshold, the program branches to step F03. If the number exceeds the threshold, the program branches to step F05. The threshold, which is a positive integer, is set considering the capacity of the non-volatile memory 16, the property of the computer 2 and so on. This determination limits the number of accesses that are taken into account when the program updates the contents of the non-volatile memory 16.

Referring to Figs. 4 and 11, in step F05, the present access is registered in the entry area 411. Specifically, the first and last block addresses of the present access are stored in the first and last block address areas 4111 and 4112, respectively. The data previously stored in the entry areas 411 to 417 is moved to the entry areas 412 to 148, respectively. The data previously stored in the entry area 418 is deleted.

Referring to Figs. 5 and 11, in step F06, the weight table area 5 is updated.

At first, the weights of data blocks registered in the area 41 are calculated. In this exemplary embodiment having eight entry areas 411 to 418, $(9 - N)^2$ is the weight of the data block which is accessed N times before and registered in the entry area 41N. This weight can be generalized as $(M + 1 - N)^2$ where the system has M entry areas. If the same data block is stored in the area 41, the weight is added up. That is, if a specific data block is registered in the entry areas 413, 415 and 416, the weight of this data block is $(9 - 3)^2 + (9 - 5)^2 + (9 - 6)^2 = 61$.

After calculating the weight, the data blocks are registered in the ranking areas 51 to 5n in the descending order of the weight thereof. That is, in the first and last data block address areas 511 and 512 is stored those of the data block having the greatest weight.

Next, in step F07, the program determines whether or not the contents of the non-volatile memory 16 need to be updated. The detailed process of the determination is described below.

In a first step, the program determines the number Sg of the segment area for storing the data blocks frequently accessed soon after the power 100 is turned on. In this exemplary embodiment, the number Sg is equal to 2 because the segment areas 231 and 232 are provided for this purpose.

In a second step, the program determines the data blocks registered in the ranking areas 51 to (50 + Sg) = 52 .

In a third step, comparing the first and last data block addresses in the data block table area 22 (Fig. 3) to those in the weight table area 5 (Fig. 5), the program determines whether or not the segment areas 231 and 232 stores all of the data blocks obtained in the second step. If all data blocks are stored, the program branches to step F04 and the access statistics process is terminated. If some of the data blocks are not stored, the program branches to step G01.

Next are described the processes after step F03.

Referring to Fig. 11, when the program determines that the number of accesses after the power 100 is turned on exceeds the threshold, the program branches to step F03.

In step F03, the program determines whether or not the number of accesses after the shutdown of the disk memory drive 12 exceeds a predetermined threshold. In step F02, the threshold is set taking into account the capacity of the non-volatile memory 16, the properties and characteristics of the computer 2 and so on. If the number of accesses exceeds the threshold, the program branches to step F03 and the access statistics process is terminated. If the number is less than or equal to the threshold, the program branches to step F08.

In steps F08 to F10, the program executes substantially the same operations as those of steps F05 to F07, respectively, with respect to the areas 421 to 428 and 233 to 235 instead of the areas 411 to 418 and 231 to 232.

In step F10, the program branches to step G10 when the non-volatile memory 16 must be updated.

Next is described the processes after steps G01 and G10.

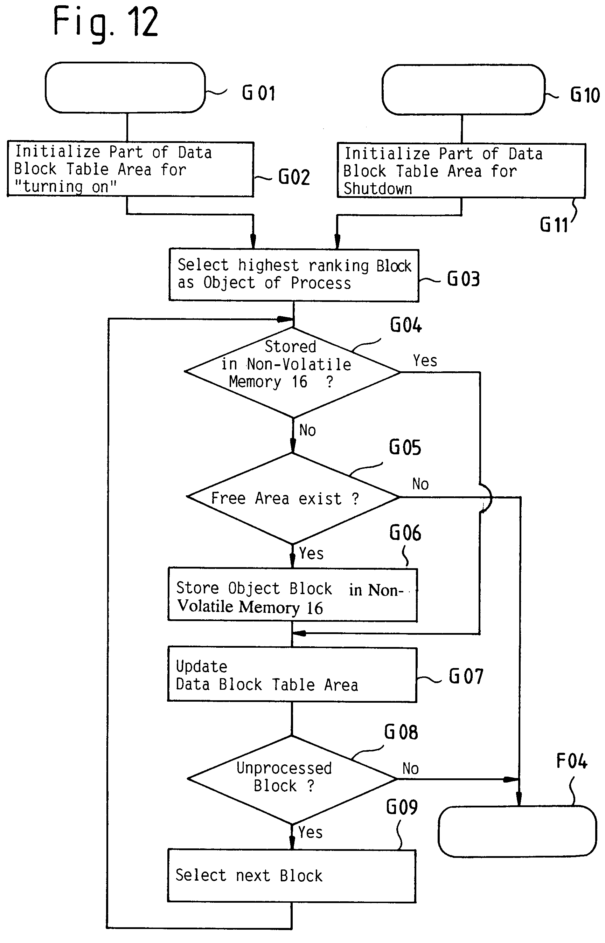

Referring to Fig. 12, in step G02, the contents of the data block table area 22 is saved in the memory storing the program and not shown in the figure. After copying, the program initializes the index areas 31 and 32, which correspond to the segment areas 231 and 232 storing data accessed when the power 100 is turned on.

In step G03, the program selects the data block registered in the ranking area 51 (hereinafter referred to as a "first data block", which has highest ranking) as the object of the operation of steps G04 to G09.

In step G04, referring to the contents of the data block table area 22 saved in the memory, the program determines whether or not the first data block is stored in the segment area 231 or 232. If the first data block is found, the program branches to step G07. Otherwise, the program executes step G05.

In step G05, the program determines whether or not the non-volatile memory 16 has a free area large enough to store the first data block. The "free area" includes both the area storing no data and the area storing the data blocks not registered in the weight table area 5. If the free area is not found, the program branches to step F04. Otherwise, the program branches to step G06.

In step G06, the contents of the first data block is copied to the free area in the non-volatile memory 16. The first data block is transferred from the buffer memory 14. If the buffer memory 14 does not store the first data block, the first data block is transferred from the disk memory drive 12.

In step G07, information about the first data block is stored in one of the index areas 31 to 35 corresponding to the segment area storing the first data block. Specifically, the address in the non-volatile memory 16 is stored in the segment address area 311. The first and last data block addresses in the disk memory are stored in the first and last block address areas 312 and 313, respectively.

In step G08, the program determines whether or not all the data blocks registered in the weight table area 5 are processed by the steps G04 to G07. If all of the data blocks are processed, the program branches to step F04. Otherwise the program proceeds to step G09. In this exemplary operation, the program branches to step G09 because the data blocks registered in the ranking areas 52 to 5n are not processed.

In step G09, the program updates the object of the processes of steps G04 to G08. Specifically, the next lower ranking data block is selected as the object. In this exemplary operation, the program selects the data block registered in the index area 32, which has the second highest ranking. In the similar manner, the data blocks registered in the weight table area 5 are processed according steps G04 to G08 in sequence.

Next is described the operation after step G10.

Referring to Fig. 12, in step G11, the contents of the data block table area 22 is saved in the memory storing the program and not shown in figure 12. After copying, the program initializes the index areas 33 to 35, which correspond to the segment areas 233 to 235 storing data accessed after the shutdown of the disk memory drive 12.

In steps G03 to G09, the program executes the steps G03 to G08 with respect to the segment areas 233 to 235 instead of the segment areas 231 and 232.

Next is described the technical advantages of the present invention.

First, according to the present invention, a disk memory apparatus can send requested data before the disk memory becomes ready to be accessed because the data is transferred from the non-volatile memory that stores data frequently accessed when the power is turned on.

Second, the hit-ratio of the data in the non-volatile memory 16 is high because the data to be stored in the non-volatile memory 16 is selected according to the statistics of the accesses instead of a conventional replacing strategy such as LRU.

Third, the present invention contributes to power saving and enhances the lifetime of the apparatus because the disk memory drive 12 is stopped after it is idle for a predetermined period of time. This advantage is enhanced by the high hit-ratio of the non-volatile memory 16 due to the access statistics.

Next is described the modifications of the present invention.

The non-volatile memory 16 may store the positions of "bad spots" in which read errors occurred in addition to the data stated above for effective use of non-volatile memory 16.

The areas provided in the non-volatile memory 16 is not limited to those described above.

The non-volatile memory 16 may comprise a plurality of memory units.

The nonvolatile memory may store information indicating a status or configuration of said disk memory apparatus because, in many computer systems, the computer 2 frequently requests this information soon after the disk memory apparatus is turned on.

The present embodiments are therefore, to be considered in all respects as illustrative and not restrictive, the scope of the invention being indicated by the appended claims rather than by the foregoing description and all changes which come within the meanings and range of equivalency of the claims are therefore intended to the embraced therein.

**Claims**

1. A disk memory apparatus coupled with an information processing device and supplied with electrical power, comprising:
   a disk memory drive including data therein;
   a nonvolatile memory for storing a portion of data contained in said disk memory drive and maintaining contents thereof when said electrical power is removed; and
   a controller transferring data in said nonvolatile memory to said information processing device when said disk memory drive is in a condition other than being ready for data reproduction.

2. A disk memory apparatus according to claim 1, wherein said controller transfers said data when said disk memory device is in a condition other than being ready for data reproduction after turning on of said electrical power.

3. A disk memory apparatus according to claim 1 or 2, wherein said nonvolatile memory stores data requested by said information processing device when said electrical power is turned on.

4. A disk memory apparatus according to any of claims 1 to 3, wherein said nonvolatile memory stores information indicating a status of said disk memory apparatus.

5. A disk memory apparatus according to any of claims 1 to 4, wherein said nonvolatile memory stores information indicating a configuration of said disk memory apparatus.

6. A disk memory apparatus according to any of claims 1 to 5, further comprising shutdown means for stopping said disk memory drive after said disk memory apparatus is idle for a predetermined period of time.

7. A disk memory apparatus according to claim 6, wherein said controller transfers said data when said disk memory drive is in said condition due to stoppage thereof by said shutdown means.

8. A disk memory apparatus according to any of claims 1 to 7, wherein said controller selects data to be stored in said nonvolatile memory according to statistics on data accessed by said information processing device.

9. A disk memory apparatus according to claim 8, wherein said controller stores in said nonvolatile memory history information indicating a history of data accessed by said information processing device, and said controller selects data to be stored in said nonvolatile memory according to said history information.

10. A disk memory apparatus according to claim 8 or 9, wherein said controller selects data to be stored in said nonvolatile memory according to a frequency of access to said data.

11. A disk memory apparatus according to claim 9 or 10, wherein said controller updates said history information according to a predetermined number of data accesses is occurring after power-on of said disk memory apparatus.

12. A disk memory apparatus according to any of claims 9 to 11, wherein said controller updates said history information according to a predetermined number of data accesses occurring after stoppage of said disk memory drive by said shutdown means.

13. A disk memory apparatus according to any of claims 1 to 12, wherein said controller sends a ready signal to said information processing device when said disk memory drive is in said condition after power-on of said disk memory apparatus.

14. A disk memory apparatus according to any of claims 1 to 13, wherein said nonvolatile memory comprises a flash memory.

15. A disk memory apparatus according to any of claims 1 to 14, wherein said nonvolatile memory comprises an access memory having a battery back-up.

16. A disk memory apparatus according to any of claims 1 to 15, wherein said controller transfers said data prior to said disk memory drive reaching a predetermined rotational speed.

17. A disk memory apparatus according to any of claims 1 to 16, wherein said controller transfers said data within a predetermined amount of time after said disk memory apparatus is powered-on.

Fig. 1

# Fig. 2

| | |
|---|---|
| 21 ~ | Flag Area |
| 22 ~ | Data Block Table Area |
| 231 ~ | First Segment Area |
| 232 ~ | Second Segment Area |
| 233 ~ | Third Segment Area |
| 234 ~ | Fourth Segment Area |
| 235 ~ | Fifth Segment Area |
| 24 ~ | Statistics Area |

23 — Data Block Storage Area

Non-Volatile Memory 16

Fig. 3

Availability Area
Segment Address Area
First Block Address Area
Last Block Address Area

310
311
312
313
31

1st Index Area
2nd Index Area
3rd Index Area
4th Index Area
5th Index Area

31
32
33
34
35

22
Data
Block
Table
Area

EP 0 702 305 A1

Area for
"turning on"

411 — 1st Entry Area
412 — 2nd Entry Area
413 — 3rd Entry Area

418 — 8th Entry Area

Area for
"shutdown"

421 — 1st Entry Area
422 — 2nd Entry Area
423 — 3rd Entry Area
424 — 4th Entry Area

428 — 8th Entry Area

5

First Block Address Area — 4111
Last Block Address Area — 4112
411

First Block Address Area — 4211
Last Block Address Area — 4212
421

41

42

Fig. 4

Fig. 5

# Fig. 6

Power 100 turn on — A 01

Effective Data exists in Non-Volatile Memory? — A02

No → Prepare starting of disk memory drive — B01

Yes

A11

Send read Signal to Computer 2 — A03

Command from Computer 2 ? — A04

No

Yes

Request for Data Reproduction ? — A05

No → E01

Yes

Refer to Data Block Table Area — A06

Requested Data exist ? — A07

No

Yes

CRC Check Error ? — A08

Yes → D 01

No

Transfer Data from Non-Volatile Memory 16 — A09

Access Statistics Process — A10

DMD: Disk Memory Drive

# Fig. 7

B 01

Start DMD — B02

B 03

No ← Ready ?

Yes

B 11 — Send ready Signal to Computer 2 — B 04

B12 — Activate Shutdown Timer — B 05

B 06

Receive Command ? — Yes → C 01

No

Control DMD — B 07

B 08

No ← Pre-determined Time Lapses ?

Yes

Stop Timer — B 09

DMD:
Disk Memory Drive

DMD Shutdown — B 10

A 11

C01

C02
Request
for DATA Repro-
duction ?
No

Yes

Refer to Data Block
Table Area — C03

Stop
Shutdown Timer — C08

E05

C04
Requested
Block Exist ?
No

Yes

C05
CRC
Check Error ?
Yes

No

Transfer Data from Non-
Volatile Memory — C06

Stop
Shutdown Timer — C09

D08

Access Statistics
Process — C07

B12

Fig. 8

16

# Fig. 9

D01

Start DMD — D02

D08

Ready ? — D03
No
Yes

Read Data out of DMD — D04

CRC Check Error ? — D05
Yes
No

Error Correction — D09

Transfer Data to Computer 2 — D06

Access Statistics Process — D07

DMD:
Disk Memory Drive

B11

E 01

Start    DMD — E 02

E05

E 03

No          Ready ?

Yes

Receive Command from
Computer  2 — E 04

B 11

Fig. 10

F01

Number of Accesses
after Shutdown is less
than or equal to Threshold?

F02

Yes

No

Number of Accesses
after "turning on"
is less than or equal
to Threshold ?

F03

F05

Yes

F08

Update
Statistics Area

No

Update
Statistics Area

F06

F09

Update Weight
Table Area

Update Weight
Table Area

F07

F10

Updating
of Memory 16
is needed?

No

No

Updat-
ing Memory 16 is
needed ?

Yes

G01

F04

Yes

G10

Fig. 11

19

EP 0 702 305 A1

# Fig. 12

```
( ) —— G01                    ( ) —— G10
   |                             |
┌──────────────────┐         ┌──────────────────┐
│ Initialize Part  │         │ Initialize Part  │
│ of Data          │— G02    │ of Data          │
│ Block Table Area │         │ Block Table Area │
│ for "turning on" │         │ for Shutdown     │
└──────────────────┘         └──────────────────┘
   |                             |      G11
   └──────────────┬──────────────┘
                  ▼
        ┌──────────────────────────┐
        │ Select highest ranking   │— G03
        │ Block as Object of Process│
        └──────────────────────────┘
                  │
                  ▼           G04
              ◇ Stored            Yes
            in Non-Volatile ──────────┐
             Memory 16 ?              │
                  │ No                │
                  ▼           G05     │
              ◇ Free Area     No      │
                 exist ? ─────────────┤
                  │ Yes       G06     │
                  ▼                   │
        ┌──────────────────────┐      │
        │ Store Object Block    │     │
        │ in Non-Volatile       │     │
        │ Memory 16             │     │
        └──────────────────────┘      │
                  │                   │
                  ▼                   │
        ┌──────────────────────┐      │
        │ Update               │— G07 │
        │ Data Block Table Area │     │
        └──────────────────────┘      │
                  │                   │
                  ▼           G08      │
              ◇ Unprocessed   No       │
                 Block ? ──────────────┤
                  │ Yes      G09        ▼
                  ▼                   ( ) —— F04
        ┌──────────────────────┐
        │ Select next Block     │
        └──────────────────────┘
```

**European Patent Office**

## EUROPEAN SEARCH REPORT

Application Number

EP 95 11 4329

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 475 639 (KAWASAKI STEEL CO) 18 March 1992 * abstract * --- | 1-17 | G06F12/08 G11B20/10 G11B19/00 G11B19/02 |
| A | EP-A-0 481 716 (FUJITSU LTD) 22 April 1992 * abstract * --- | 1,2,13 | |
| A | PATENT ABSTRACTS OF JAPAN vol. 016 no. 551 (P-1453) ,20 November 1992 & JP-A-04 205852 (HITACHI LTD;OTHERS: 01) 28 July 1992, * abstract * --- | 1 | |
| A | EP-A-0 452 989 (TOKYO SHIBAURA ELECTRIC CO ;TOSHIBA COMPUTER ENG (JP)) 23 October 1991 * abstract * --- | 8-12 | |
| A | WO-A-92 15933 (ZITEL CORP) 17 September 1992 * claim 2 * --- | 8-12 | TECHNICAL FIELDS SEARCHED (Int.Cl.6) G06F G11B |
| A | EP-A-0 392 895 (SUNDISK CORP) 17 October 1990 * abstract * --- | 14 | |
| A | EP-A-0 357 464 (MATSUSHITA ELECTRIC IND CO LTD) 7 March 1990 * abstract * * column 2, line 33 - line 41 * --- | 15 | |
| P,X | EP-A-0 666 539 (IBM) 9 August 1995 * the whole document * | 1,6,8 | |
| P,A | | 2-5,7, 9-17 | |

----- 

The present search report has been drawn up for all claims

| Place of search | Date of completion of the search | Examiner |
|---|---|---|
| THE HAGUE | 19 December 1995 | Annibal, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)